# EUROPEAN PATENT APPLICATION

(11) **EP 1 787 716 A1**
(43) Date of publication of application: **23.05.2007**
(21) Application number: 06025492.7
(22) Date of filing: 29.01.2003
(51) Int. Cl.: B01J 13/00, C01B 33/16, C01B 33/158, F16L 59/02, E04B 1/74

(54) **Heat resistant aerogel insulation composite and method for its preparation;aerogel binder composition and method for its preparation**

(30) Priority: 29.01.2002 US 352671 P; 15.05.2002 US 381215 P
(62) Divisional of application: 03705960.7
(71) Applicant: Cabot Corporation, Boston MA 02210-2019 (US)
(72) Inventor: Ackerman, William C., Cambridge, MA 02139 (US); Poetter, Franz-Josef Heinrich, 63791 Karlstein (DE); Field, Rex J., 67549 Worms (DE); Scheidemantel, Beate, 63450 Hanau (DE)
(74) Representative: Trueman, Lucy Petra

(57) **Abstract**

The invention provides a heat resistant aerogel insulation composite comprising an insulation base layer comprising hydrophobic aerogel particles and an aqueous binder, and a thermally reflective top layer comprising a protective binder and an infrared reflecting agent. The invention also provides a method of preparing a heat resistant aerogel insulation composite, as well as methods of preparing an aerogel binder composition and aerogel binder compositions so prepared.

## Description

### FIELD OF THE INVENTION

This invention pertains to a heat resistant aerogel insulation composite, an aerogel binder composition, and methods for preparing same.

### BACKGROUND OF THE INVENTION

Aerogels are known to provide superior thermal and acoustic insulation properties. Aerogel insulation materials have been made by compressing dry particulate aerogel compositions, or by combining aerogel particles with binders, to provide a cohering particulate mass. However, dry particle compositions and aerogel-binder compositions, while providing good thermal and acoustic insulation, tend to provide little resistance to abrasion and thermal degradation under high temperature conditions.

Thus, it would be advantageous to obtain an aerogel insulation article that provides good thermal and/or acoustic insulation with improved durability and heat resistance. The invention provides such an article, as well as a method for preparing such an article. These and other advantages of the invention, as well as additional inventive features, will be apparent from the description of the invention provided herein.

### BRIEF SUMMARY OF THE INVENTION

The invention provides a heat resistant aerogel insulation composite comprising, consisting essentially of, or consisting of (a) an insulation base layer comprising, consisting essentially of, or consisting of hydrophobic aerogel particles, an aqueous binder, and, optionally, a foaming agent, and (b) a thermally reflective top layer comprising, consisting essentially of, or consisting of a protective binder and an infrared reflecting agent. A method for preparing a heat resistant aerogel insulation composite is also provided, which method comprises, consists essentially of, or consists of (a) providing on a substrate an insulation base layer comprising, consisting essentially of, or consisting of hydrophobic aerogel particles, an aqueous binder, and, optionally, a foaming agent, and (b) applying to a surface of the insulation base layer a thermally reflective top layer comprising, consisting essentially of, or consisting of a protective binder and an infrared reflecting agent. In a related aspect, the present invention provides a method for preparing an aerogel binder composition, which method comprises, consists essentially of, or consists of (a) providing a binder composition comprising, consisting essentially of, or consisting of an aqueous binder and a foaming agent, (b) agitating the binder composition to provide a foamed binder composition, and (c) combining the foamed binder composition with hydrophobic aerogel particles to provide an aerogel binder composition. Also, a method for preparing an aerogel binder composition is provided, which method comprises, consists essentially of, or consists of (a) providing a binder composition comprising, consisting essentially of, or consisting of an aqueous binder and, optionally, a foaming agent, (b) providing an aerogel composition comprising, consisting essentially of, or consisting of hydrophobic aerogel particles, and (c) simultaneously applying the binder composition and the aerogel composition to a substrate, whereupon the binder composition is mixed with the aerogel composition to provide an aerogel binder composition.

### DETAILED DESCRIPTION OF THE INVENTION

### Heat Resistant Aerogel Insulation Composite

The heat resistant aerogel insulation composite of the present invention comprises, consists essentially of, or consists of (a) an insulation base layer comprising, consisting essentially of, or consisting of hydrophobic aerogel particles, an aqueous binder, and, optionally, a foaming agent, and (b) a thermally reflective top layer comprising, consisting essentially of, or consisting of a protective binder and an infrared reflecting agent.

Any suitable hydrophobic aerogel particles can be used in conjunction with the invention. Suitable hydrophobic aerogel particles include organic aerogel particles, such as resorcinol-formaldehyde or melamine-formaldehyde aerogel particles, and inorganic aerogel particles, such as metal oxide aerogel particles (*e.g*., silica, titania, and alumina aerogels). Metal oxide aerogel particles, especially silica aerogel particles, are preferred. Suitable hydrophobic aerogel particles are commercially available, and methods for preparing suitable hydrophobic aerogels are known (*see, e.g.,* WO 99/36355A2; WO 99/36356A2; WO 99/36479A1; WO 98/45210A2; WO 98/45035A1; WO 98/45032A1; WO 96/18456A2).

The hydrophobic aerogel particles desirably comprise opacifying agents, which reduce the thermal conductivity of the hydrophobic aerogel particles. Any suitable opacifying agent can be used, including, but not limited to, carbon black, carbon fiber, titania, or modified carbonaceous components as described, for example, in WO 96/18456A2. The hydrophobic aerogel particles can also contain fibers. Suitable fibers include any of those discussed in the following sections.

The size of the hydrophobic aerogel particles will depend, in part, on the desired thickness of the heat resistant aerogel insulation composite. For the purposes of the invention the terms "particle size" and "particle diameter" are used synonymously. Generally, larger aerogel particles provide greater thermal insulation; however, the aerogel particles should be relatively small compared with the thickness of the heat resistant aerogel insulation composite (*e.g.*, the insulation base layer of the heat resistant aerogel insulation composite) so as to allow the aqueous binder to surround the hydrophobic aerogel particles and form a matrix. For most applications, it is suitable to use hydrophobic aerogel particles having an average particle diameter (by weight) of about 5 mm or less (e.g., about 0.01-5 mm). Preferably, hydrophobic aerogel particles having an average particle diameter (by weight) of about 3 mm or less (*e.g.,* about 0.1-3 mm) or about 2 mm or less (*e.g.,* about 0.5-2 mm or about 1-1.5 mm). Preferably, the hydrophobic aerogel particles used in conjunction with the invention have a narrow particle size distribution. Thus, for example, it is preferred to use hydrophobic aerogel particles, wherein at least about 95% of the hydrophobic aerogel particles (by weight) have a particle diameter of about 5 mm or less (e.g., about 0.01-5 mm), preferably about 3 mm or less (*e.g.,* about 0.01-3 mm) or even about 2 mm or less (*e.g.*, about 0.5-2 mm or about 1-1.5 mm). Desirably, the hydrophobic aerogel particles are approximately spherical in shape. The particle size and/or shape of the hydrophobic aerogel particles can change when the particles are combined with the other components of the high temperature aerogel insulation composite due to the mixing process or other factors (*e*.*g*., the hydrophobic aerogel particles can be broken). Thus, all particle sizes and shapes mentioned above refer to the particle sizes and shapes of the hydrophobic aerogel particles prior to being combined with the other components of the high temperature aerogel insulation composite. Desirably, the hydrophobic aerogel particles have a particle size after being combined with the other components of the high temperature aerogel insulation composite that is about the same as the size of the hydrophobic aerogel insulation particles prior to such combination (*i.e.*, as described above).

Any amount of the hydrophobic aerogel particles can be used in the heat resistant aerogel insulation composite. For example, the heat resistant aerogel insulation composite (*e.g.,* the insulation base layer of the heat resistant aerogel insulation composite) can comprise about 5-99 vol.% hydrophobic aerogel particles based on the total liquid/solid volume of the insulation base layer. The total liquid/solid volume of the insulation base layer can be determined by measuring the volume of the combined liquid and solid components of insulation base layer (*e.g.,* hydrophobic aerogel particles, binder, foaming agent, etc.). If the insulation base layer (*e.g.,* the binder of the insulation base layer) is to be foamed, the total liquid/solid volume of the insulation base layer is the volume of the combined liquid and solid components of the insulation base layer prior to foaming. Of course, as the proportion of hydrophobic aerogel particles increases, the thermal conductivity of the heat resistant aerogel insulation composite decreases, thereby yielding enhanced thermal insulation performance; however, the mechanical strength and integrity of the insulation base layer decreases with increasing proportions of the hydrophobic aerogel particles due to a decrease in the relative amount of aqueous binder used. Accordingly, it is often desirable to use about 50-95 vol.% aerogel particles in the insulation base layer, more preferably about 75-90 vol.% aerogel particles.

The insulation base layer of the heat resistant aerogel insulation composite can comprise any suitable aqueous binder. The term aqueous binder, as used herein, refers to a binder that, prior to being used to prepare the insulation base layer, is water-dispersible or water-soluble. It is, therefore, to be understood that the term aqueous binder is used to refer to an aqueous binder in its wet or dry state (*e.g.*, before or after the aqueous binder has been dried or cured, in which state the binder may no longer comprise water) even though the aqueous binder may not be dispersible or soluble in water after the binder has been dried or cured. The particular aqueous binder chosen should be one that will not penetrate the surface of the hydrophobic aerogel particles to any significant degree. Preferred aqueous binders are those which, after drying, provide a water-resistant binder composition.
Suitable aqueous binders include, for example, acrylic binders, silicone-containing binders, phenolic binders, vinyl acetate binders, ethylene-vinyl acetate binders, styrene-acrylate binders, styrene-butadiene binders, polyvinyl alcohol binders, and polyvinyl-chloride binders, and acrylamide binders, as well as mixtures and co-polymers thereof. The binder can be used alone or in combination with suitable cross-linking agents. Preferred aqueous binders are aqueous acrylic binders.

The insulation base layer of the heat resistant aerogel insulation composite can comprise any amount of the aqueous binder. For example, the insulation base layer can comprise 1-95 vol.% of the aqueous binder based on the total liquid/solid volume of the insulation base layer. Of course, as the proportion of the aqueous binder increases, the proportion of the aerogel necessarily decreases and, as a result, the thermal conductivity of the insulation base layer is increased. Accordingly, it is desirable to use as little of the aqueous binder as needed to attain a desired amount of mechanical strength. For most applications, the insulation base layer comprises about 1-50 vol.% aqueous binder, or about 5-25 vol.% aqueous binder, or even about 5-10 vol.% aqueous binder.

The insulation base layer preferably comprises a foaming agent in addition to the aqueous binder and hydrophobic aerogel particles. Without wishing to be bound by any particular theory, the foaming agent is believed to enhance the adhesion between the hydrophobic aerogel particles. Also, the foaming agent is believed to improve the rheology of the aqueous binder (*e.g.*, for sprayable applications) and, especially, allows the binder to be foamed by agitating or mixing (*e*.*g*., frothing) the combined binder and foaming agent prior to or after the incorporation of the hydrophobic aerogel particles, although the foaming agent can be used without foaming the binder. In addition, a foamed binder can be advantageously used to provide a foamed insulation base layer having a lower density than a non-foamed base layer.

While the use of a foaming agent allows the binder to be foamed by agitation or mixing, the binder can, of course, be foamed using other methods, either with or without the use of a foaming agent. For example, the binder can be foamed using compressed gasses or propellants, or the binder can be foamed by passing the binder through a nozzle (*e.g.*, a nozzle that creates high-shear or turbulent flow).

Any suitable foaming agent can be used in the insulation base layer. Suitable foaming agents include, but are not limited to, foam-enhancing surfactants (*e.g.*, non-ionic, cationic, anionic, and zwitterionic surfactants), as well as other commercially available foam enhancing agents, or mixtures thereof. The foaming agent should be present in an amount sufficient to enable the aqueous binder to be foamed, if such foaming is desired. Preferably, about 0.1-5 wt.%, such as about 0.5-2 wt.%, of the foaming agent is used.

The insulation base layer can have any desired thickness. Heat resistant aerogel insulation composites comprising thicker insulation base layers have greater thermal and/or acoustic insulation properties; however, the heat resistant aerogel composite of the invention allows for the use of a relatively thin insulation base layer while still providing excellent thermal and/or acoustic insulation properties. For most applications, an insulation base layer that is about 1-15 mm thick, such as about 2-6 mm thick, provides adequate insulation.

The thermal conductivity of the insulation base layer will depend, in part, upon the particular formulation used to provide the insulation base layer. Preferably, the insulation base layer is formulated so as to have a thermal conductivity of about 40 mW/(m·K) or less, more preferably about 35 mW/(m·K) or less, or even about 30 mW/(m·K) or less. It is understood that the thermal conductivity of the insulation base layer is measured after drying the insulation base layer.

Similarly, the density of the insulation base layer will depend, in part, upon the particular formulation used to provide the insulation base layer. Preferably, the insulation base layer is formulated so as to have a density of about 0.5 g/cm³ or less, preferably about 0.3 g/cm³ or less, such as about 0.2 g/cm³ or less, or even about 0.1 g/cm³ or less (e.g., about 0.05 g/cm³ or less). It is understood that the density of the insulation base layer is measured after drying the insulation base layer.

The insulation base layer may also comprise reinforcing fibers. The reinforcing fibers can provide additional mechanical strength to the insulation base layer and, accordingly, to the heat resistant insulation composite. Fibers of any suitable type can be used, such as fiberglass, alumina, calcium phosphate mineral wool, wollastonite, ceramic, cellulose, carbon, cotton, polyamide, polybenzimidazole, polyaramid, acrylic, phenolic, polyester, polyethylene, PEEK, polypropylene, and other types of polyolefins, or mixtures thereof. Preferred fibers are heat and fire resistant, as are fibers that do not have respirable pieces. The fibers also can be of a type that reflects infrared radiation, such as carbon fibers, metallized fibers, or fibers of other suitable infrared-reflecting materials. The fibers can be in the form of individual strands of any suitable length, which can be applied, for example, by spraying the fibers onto the substrate with the other components of the insulation base layer (*e.g.,* by mixing the fibers with one or more of the other components of the insulation base layer before spraying, or by separately spraying the fibers onto the substrate). Alternatively, the fibers can be in the form of webs or netting, which can be applied, for example, to the substrate, and the other components of the insulation base layer can be sprayed, spread, or otherwise applied over the web or netting. The fibers can be used in any amount sufficient to give the desired amount of mechanical strength for the particular application in which the heat resistant aerogel insulation composite will be used. Typically, the fibers are present in the insulation base layer an amount of about 0.1-50 wt. %, desirably an amount of about 1-20 wt.%, such as an amount of about 2-10 wt. %, based on the weight of the insulation base layer.

The thermally reflective top layer of the heat resistant aerogel insulation composite comprises a protective binder. The thermally reflective top layer imparts a higher degree of mechanical strength to the heat resistant aerogel insulation composite and/or protects the insulation base layer from degradation due to one or more environmental factors (*e*.*g*., heat, humidity, abrasion, impact, etc.). Thus, the thermally reflective top layer is, preferably, substantially or completely free of aerogel particles, which tend to reduce the strength of the thermally reflective layer. By substantially free of aerogel particles is meant that the thermally reflective layer contains aerogel particles in an amount of about 20 vol.% or less, such as about 10 vol.% or less, or even about 5 vol.% or less (*e.g*., about 1 vol.% or less). The protective binder can be any suitable binder that is resistant to the particular conditions (*e.g.,* heat, stress, humidity, etc.) to which the heat resistant aerogel insulation composite will be exposed. Thus, the selection of the binder will depend, in part, upon the particular properties desired in the heat resistant aerogel insulation composite. The protective binder can be the same or different from the aqueous binder of the insulation base layer. Suitable binders include aqueous and non-aqueous natural and synthetic binders. Examples of such binders include any of the aqueous binders suitable for use in the insulation base layer, as previously described herein, as well as non-aqueous binders. Preferred binders are aqueous binders, such as aqueous acrylic binders. Especially preferred are self-crosslinking binders, such as self-crosslinking acrylic binders.

The infrared reflecting agent can be any compound or composition that reflects or otherwise blocks infrared radiation, including opacifiers such as carbon black, carbon fibers, titania (rutile), and metallic and non-metallic particles, fibers, pigments, and mixtures thereof. Preferred infrared reflecting agents include metallic particles, pigments, and pastes, such as aluminum, stainless steel, copper/zinc alloys, and copper/chromium alloys. Aluminum particles, pigments, and pastes are especially preferred. In order to prevent the infrared reflecting agent from settling in the protective binder, the thermally reflective top layer advantageously comprises an anti-sedimentation agent. Suitable anti-sedimentation agents include commercially available fumed metal oxides, clays, and organic suspending agents. Preferred anti-sedimentation agents are fumed metal oxides, such as fumed silica, and clays, such as hectorites. The thermally reflective layer also can comprise a wetting agent, such as a non-foaming surfactant.

Preferred formulations of the thermally reflective top layer comprise reinforcing fibers. The reinforcing fibers can provide additional mechanical strength to the thermally reflective top layer and, accordingly, to the heat resistant insulation composite. Fibers of any suitable type can be used, such as fiberglass, alumina, calcium phosphate mineral wool, wollastonite, ceramic, cellulose, carbon, cotton, polyamide, polybenzimidazole, polyaramid, acrylic, phenolic, polyester, polyethylene, PEEK, polypropylene, and other types of polyolefins, or mixtures thereof. Preferred fibers are heat and fire resistant, as are fibers that do not have respirable pieces. The fibers also can be of a type that reflects infrared radiation, and can be used in addition to, or instead of, the infrared reflecting agents previously mentioned. For example, carbon fibers or metallized fibers can be used, which provide both reinforcement and infrared reflectivity. The fibers can be in the form of individual strands of any suitable length, which can be applied, for example, by spraying the fibers onto the substrate with the other components of the thermally reflective layer (*e.g.*, by mixing the fibers with one or more of the other components of the thermally reflective layer before spraying, or by separately spraying the fibers onto the insulation base layer). Alternatively, the fibers can be in the form of webs or netting, which can be applied, for example, to the insulation base layer, and the other components of the thermally reflective layer can be sprayed, spread, or otherwise applied over the web or netting. The fibers can be used in any amount sufficient to give the desired amount of mechanical strength for the particular application in which the heat resistant aerogel insulation composite will be used. Typically, the fibers are present in the thermally reflective top layer in an amount of about 0.1-50 wt. %, desirably an amount of about 1-20 wt.%, such as an amount of about 2-10 wt. %, based on the weight of the thermally reflective layer.

The thickness of the thermally reflective top layer will depend, in part, on the degree of protection and strength desired. While the thermally reflective top layer can be any thickness, it is often desirable to keep the thickness of the heat resistant aerogel insulation composite to a minimum and, thus, to reduce the thickness of the thermally reflective top layer to the minimum amount needed to provide an adequate amount of protection for a particular application. Generally, adequate protection can be provided by a thermally reflective top layer that is about 1 mm thick or less.

The thermal conductivity of the heat resistant aerogel insulation composite will depend, primarily, on the particular formulation of the insulation base layer, although the formulation of the thermally reflective coating may have some effect. Preferably, the heat resistant aerogel insulation composite is formulated so as to have a thermal conductivity of about 40 mW/(m·K) or less, more preferably about 35 mW/(m·K) or less, or even about 30 mW/(m·K) or less.

The term "heat resistant" as it is used to describe the aerogel insulation composite of the invention means that the aerogel insulation composite will not substantially degrade under high heat conditions. An aerogel insulation composite is considered to be heat resistant within the meaning of the invention if, after exposure to high-heat conditions as described in Example 1 for a period of 1 hour, the aerogel insulation composite retains at least about 85%, preferably at least about 90%, more preferably at least about 95%, or even at least about 98% or all of its original mass. Specifically, the high heat conditions are provided using a 250 W heating element (IRB manufactured by Edmund Bühler GmbH, Germany) connected to a hot-air blower (HG3002 LCD manufactured by Steinel GmbH, Germany) with thin aluminum panels arranged around the device to form a tunnel. The aerogel insulation composite is exposed to the high heat conditions (thermally reflective layer facing the heating element) at a distance of about 20 mm from the heating element, wherein the hot air blower (at full blower setting and lowest heat setting) provides a continuous flow of air between the heating element and the aerogel insulation composite. Desirably, the heat resistant aerogel insulation composite does not visibly degrade under such conditions.

When the heat resistant aerogel insulation composite is to be used under conditions of a certain flammability classification, for example, where it could be exposed to open-flames or extremely high-temperature conditions, the aerogel insulation desirably includes a suitable fire retardant. The fire retardant can be included in the insulation base layer and/or the thermally reflective top layer of the heat resistant aerogel insulation composite. Suitable fire retardants include aluminum hydroxides, magnesium hydroxides, ammonium polyphosphates and various phosphorus-containing substances, and other commercially available fire retardants and intumescent agents.

The heat resistant aerogel insulation composite (*e.g.*, the insulation base layer and/or the thermally reflective layer of the aerogel insulation composite) may additionally comprise other components, such as any of various additives known in the art. Examples of such additives include rheology control agents and thickeners, such as fumed silica, polyacrylates, polycarboxylic acids, cellulose polymers, as well as natural gums, starches and dextrins. Other additives include solvents and co-solvents, waxes, surfactants, and curing and cross-linking agents, as required, provided they are used in amounts such that they do not cause the binder system to penetrate the hydrophobic aerogel particles to any significant degree.

### Method for Preparing a Heat Resistant Aerogel Insulation Composite and Aerogel Binder Composition

The invention further provides a method for preparing a heat resistant aerogel insulation composite comprising, consisting essentially of, or consisting of (a) providing on a substrate an insulation base layer comprising, consisting essentially of, or consisting of hydrophobic aerogel particles, an aqueous binder, and, optionally, a foaming agent, and (b) applying to a surface of the insulation base layer a thermally reflective top layer comprising a protective binder and an infrared reflecting agent. The various elements of the heat resistant aerogel insulation composite prepared in accordance with this method are as previously described herein.

The insulation base layer can be provided by any suitable method. For example, the hydrophobic aerogel particles and aqueous binder can be combined by any suitable method to form an aerogel binder composition, which then can be applied to the substrate to form an insulation base layer, for example, by spreading or spraying the aerogel binder composition on the substrate.

Preferably, however, the insulation base layer is provided by another method of the invention. In particular, the insulation base layer is provided by (a) providing a binder composition comprising, consisting essentially of, or consisting of an aqueous binder and a foaming agent, (b) agitating the binder composition to provide a foamed binder composition, (c) combining the foamed binder composition with the hydrophobic aerogel particles to provide an aerogel binder composition, and (d) applying the aerogel binder composition to the substrate to provide the insulation base layer. Alternatively, the insulation base layer can be provided by (a) providing a binder composition comprising, consisting essentially of, or consisting of an aqueous binder and, optionally, a foaming agent to provide a binder composition, (b) providing an aerogel composition comprising, consisting essentially of, or consisting of hydrophobic aerogel particles, and (c) simultaneously applying the binder composition and the aerogel composition to the substrate, wherein the binder composition is mixed with the aerogel composition to provide the insulation base layer. The aerogel composition comprises, consists essentially of, or consists of hydrophobic aerogel particles, as previously described herein, and, optionally, a suitable vehicle. The binder composition and/or aerogel composition can be applied to the substrate in accordance with the invention (*e.g.,* together or separately) by any suitable method, such as by spreading or, preferably, spraying the aerogel binder composition or the components thereof onto the substrate. By "simultaneously applying" is meant that the aerogel composition and the binder composition are separately delivered to the substrate at the same time, wherein the aerogel composition and the binder composition are mixed during the delivery process (*e.g.*, mixed in the flow path or on the substrate surface). This can be accomplished, for example, by simultaneously spraying the aerogel composition and the binder composition on the substrate, whereby the aerogel composition and binder composition are delivered via separate flowpaths. The flowpaths can be joined within the spraying apparatus, such that a combined aerogel-binder composition is delivered to the substrate, or the flowpaths can be entirely separate, such that the aerogel composition is not combined with the binder composition until the respective compositions reach the substrate.

In this regard, the invention provides a method for preparing an aerogel binder composition, as well as a composition prepared by such a method, which can be used to provide the insulation base layer of the heat resistant aerogel insulation composite, or can be used for other purposes. In particular, the method for preparing an aerogel binder composition comprises, consists essentially of, or consists of (a) providing a binder composition comprising, consisting essentially of, or consisting of an aqueous binder and a foaming agent, (b) agitating the binder composition to provide a foamed binder composition, and (c) combining the foamed binder composition with hydrophobic aerogel particles to provide an aerogel binder composition. Alternatively, the aerogel binder composition can be prepared in accordance with the present invention by a method comprising (a) providing a binder composition comprising, consisting of, or consisting essentially of an aqueous binder and, optionally, a foaming agent, (b) providing an aerogel composition comprising, consisting essentially of, or consisting of hydrophobic aerogel particles, and (c) simultaneously applying the binder composition and the aerogel composition to a substrate, whereupon the binder composition is mixed with the aerogel composition to provide an aerogel binder composition.

By combining the hydrophobic aerogel particles with the binder composition according to these process steps, an aerogel binder composition having desirable, if not unique, properties can be provided, which aerogel composition is yet another aspect of the invention. In particular, and without wishing to be bound to any particular theory, the aerogel binder compositions produced in accordance with the invention exhibit a reduced tendency to "wet-out" the aerogel particles, thereby increasing the thermal conductivity of the aerogel binder composition. Also, the method of the invention enables the use of a high aerogel to binder ratio, which enhances the thermal performance of the aerogel binder composition and reduces the density of the aerogel binder composition. Furthermore, the method of the invention provides a sprayable aerogel binder composition, allowing flexibility in the application and use of the aerogel binder composition. The hydrophobic aerogel particles, binder composition, and foaming agent are as previously described herein with respect to the aerogel insulation composition.

While the binder, alone or in combination with the foaming agent, is, preferably, foamed by agitation or mixing, other foaming methods can be used. For example, the binder can be foamed using compressed gasses or propellants, or the binder can be foamed by passing the binder through a nozzle (*e.g.*, a nozzle that creates high-shear or turbulent flow).

The thermally reflective top layer of the heat resistant aerogel insulation composite can be applied to the surface of the insulation base layer by any suitable method. The components of the thermally reflective top layer are as previously described herein. Preferably, the components of the thermally reflective top layer are combined, with mixing, to provide a thermally reflective coating composition, which then is applied to the surface of the insulation base layer by any suitable method, for example, by spreading or spraying.

While adhesives or coupling agents may be used to adhere the thermally reflective top layer to the insulation base layer, such adhesives are not needed in accordance with the invention inasmuch as the binder in the insulation base layer or thermally reflective top layer can provide desired adhesion. The thermally reflective top layer is, preferably, applied to the insulation base layer while the insulation base layer is wet, but can be applied after the insulation base layer has been dried. The aerogel insulation composite (*e.g.*, the insulation base layer and/or the thermally reflective top layer of the aerogel insulation composite) or aerogel binder composition can be dried under ambient conditions or with heating, for example, in an oven.

### Applications and End-Uses

The heat resistant aerogel insulation composite and aerogel binder composition of the invention, as well as the methods for their preparation, can, of course, be used for any suitable purpose. However, the heat resistant aerogel insulation composite and aerogel binder composition of the invention are especially suited for applications demanding insulation that provides thermal stability, mechanical strength, and/or flexibility in the mode of application: For instance, the heat-resistant aerogel insulation composite, according to preferred formulations, especially sprayable formulations, is useful for insulating surfaces from high temperatures and can be easily applied to surfaces which might otherwise be difficult or costly to protect by conventional methods. Examples of such applications include various components of motorized vehicles and devices, such as the engine compartment, firewall, fuel tank, steering column, oil pan, trunk, and spare tire, or any other component of a motorized vehicle or device. The heat resistant aerogel insulation composite is especially well suited for insulating the underbody of a motorized vehicle, especially as a shield for components near the exhaust system. Of course, the heat resistant aerogel insulation composite and aerogel binder composition of the invention can be used to provide insulation in many other applications. For instance, the heat resistant aerogel insulation composite and aerogel binder composition can be used to insulate pipes, walls, and heating or cooling ducts. While preferred formulations of the heat resistant aerogel insulation composite and aerogel binder composition are sprayable formulations, the heat resistant aerogel insulation composite and aerogel binder composition can also be extruded or molded to provided insulation articles such as tiles, panels, or various shaped articles. In this regard, the invention also provides a substrate, such as any of those previously mentioned, comprising the heat resistant aerogel insulation composite or aerogel binder composition of the invention, as well as a method for insulating a substrate comprising the use of any of the heat resistant aerogel insulation composite, aerogel binder composition, or methods for their preparation or use.

The following examples further illustrate the invention but, of course, should not be construed as in any way limiting its scope.

### EXAMPLE 1

This example illustrates the preparation and performance of a heat resistant aerogel insulation composite in accordance with the invention.

An aerogel binder composition was prepared by combining 200 g of an aqueous acrylic binder (LEFASOL^{™} 168/1 manufactured by Lefatex Chemie GmbH, Germany), 1.7 g of a foaming agent (HOSTAPUR^{™} OSB manufactured by Clariant GmbH, Germany), and 30 g of an ammonium polyphosphate fire retardant (EXOLIT^{™} AP420 manufactured by Clariant GmbH, Germany) in a conventional mixer. The aerogel binder composition was mixed until 3 dm³ of a foamed binder composition was obtained. Subsequently, 100 g of opacified, hydrophobic aerogel beads (NANOGEL^{™} beads manufactured by Cabot Nanogel GmbH, Germany) were slowly added with mixing to maintain the volume at 3 dm³, thereby providing an aerogel-binder composition.

A thermally reflective coating composition was prepared by combining 58 g of an aqueous acrylic binder (WORLEECRYL^{™} 1218 manufactured by Worlee Chemie GmbH, Germany) with 22.6 g of a fumed silica anti-sedimentation agent (CAB-O-SPERSE^{™} manufactured by Cabot Corporation, Massachusetts) and 19.4 g of an aluminum pigment paste as an infrared reflecting agent (STAPA^{™} Hydroxal WH 24 n.l. manufactured by Eckart GmbH, Germany). The composition was gently mixed using a magnetic stirrer.

Four square (10 cm x 10 cm) test panels of thermoplastic molding were cut from the molded part of the underbody of an automobile. The first test panel (panel 1A) was left uncovered. The second test panel (panel 1B) was shielded with a conventional aluminum heat-shield of the type used to protect the automobile underbody from the heat of an exhaust system. The third test panel (panel 1C) was coated with the aerogel binder composition. The fourth test panel (panel 1D) was coated with the aerogel binder composition to provide a base insulation layer as well as the thermally reflective composition to provide a thermally reflective top layer, thereby providing a heat resistant aerogel insulation composite. The aerogel binder composition and thermally reflective composition were applied to the test panels by conventional spray techniques. The panels were dried for two hours at 130 °C in a paint-drying oven.

Thereafter, each of the four pieces of thermoplastic molding was exposed to a 250 W heating element (IRB manufactured by Edmund Bühler GmbH, Germany) connected to a hot-air blower (HG3002 LCD manufactured by Steinel GmbH, Germany). The heating element was mounted vertically, and the test panel held vertically approximately 20 mm from the hot surface; corks were used as spacers. The outlet of the hot-air blower was set so that it was about 12 cm from the heater element, and arranged to provide a continual flow of air between the heater surface and the test panel (full setting). Three thin, rectangular aluminum panels (40 x 20 cm) were arranged around the device to form a tunnel. A temperature probe was placed in contact with the rear of the test panel using heat-sink grease to ensure good thermal contact. The temperature of the test panel was displayed on a digital thermometer. The test panel was exposed to the heating element until the temperature stabilized, or until severe thermal damage could be seen. The results are given in Table 1, below.

**Table 1**

| *Panel* | *Sample* | *Temp. (°C)* | *Heating Time* | *Observations* |
|---|---|---|---|---|
| 1A | Plastic | 142* | 10 min | Decomposition of the plastic occurred |
| 1B | Plastic and a conventional aluminum heat shield | 39 | 1 h | No decomposition visible |
| 1C | Plastic coated with an aerogel binder composition | 66 | 30 min | Decomposition of the aerogel-containing layer occurred |
| 1D | Plastic coated with an aerogel insulation composite | 46 | 2.5 h | No decomposition visible |

| | | | | |
|---|---|---|---|---|
| **This experiment was terminated before a stable temperature was reached since the plastic piece was beginning to decompose quite markedly.* | | | | |

The results show that, without a shield or coating, the thermoplastic sample (panel 1A) was quickly damaged by the heat. Also, the single aerogel-containing layer (without the thermally reflective top-coat) (panel 1C) decomposed under the high heat conditions, although the temperature reached on the rear of the panel was only about 66 °C. Both the conventional aluminum heat-shield (sample 1B) and the aerogel composite system of the invention (sample 1D) prevented thermal damage to the thermoplastic sample and kept the temperature relatively low.

### EXAMPLE 2

The following example illustrates the preparation and thermal conductivity of a heat resistant aerogel insulation composite in accordance with the invention.

An aerogel binder composition was prepared as follows: 200 g of an aqueous acrylic binder (LEFASOL^{™} manufactured by Lefatex Chemie GmbH, Germany), 30 g of ammonium phosphate flame retardant (EXOLIT^{™} AP420 manufactured by Clariant GmbH, Germany), and 1.7 g of a foaming agent (HOSTAPUR^{™} OSB manufactured by Clariant GmbH, Germany) were combined and mixed in a conventional mixer at medium speed until thoroughly foamed. 100 g of opacified aerogel particles (NANOGEL^{™} beads manufactured by Cabot Nanogel GmbH, Germany) were slowly added to the foamed binder composition to provide an aerogel binder composition.

Two thermally reflective coating compositions (coating compositions 2A and 2B) were prepared by combining 13.0 g of an aluminum pigment (CHROMAL X^{™} manufactured by Eckart GmbH, Germany), 27.3 g de-ionized water, and 55.6 g of an acrylic binder (Composition 2A - WORLEECRYL^{™} 1218 manufactured by Worlee Chemie GmbH, Germany; Composition 2B - LEFASOL^{™} manufactured by Lefatex Chemie GmbH, Germany).

A 20 x 20 cm form was covered by aluminum foil for sample preparation. A first sample (sample 2A) was prepared by spraying the aerogel binder composition onto the form using a spraygun at 4-bar pressure. Immediately afterwards, coating composition 2A was sprayed onto the surface of the aerogel binder composition using a spraygun at 2-bar pressure. A second sample (sample 2B) was prepared by the same procedure, except that coating composition 2B was used. The samples had a thickness of approximately 12 mm. The samples were dried for more than 90 minutes at 130 C, and the thermal conductivity of each sample was measured using a LAMDA CONTROL^{™} A50 thermal conductivity instrument (manufactured by Hesto Elektronik GmbH, Germany). After an initial thermal conductivity measurement was taken, a second coat of coating composition 2A was applied to sample 2A, and a second thermal conductivity measurement was taken. The results are presented in Table 2.

**Table 2**

| *Sample* | *Thermal Conductivity [mW*/*(m•K)]* |
|---|---|
| 2A | 32.0 |
| 2A (twice coated) | 32.3 |
| 2B | 31.5 |

These results demonstrate that aerogel composites, which have low thermal conductivity, can be prepared in accordance with the invention.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A heat resistant aerogel insulation composite comprising
(a) an insulation base layer comprising hydrophobic aerogel particles and an aqueous binder, and
(b) a thermally reflective top layer comprising a protective binder and an infrared reflecting agent.

2. The heat resistant aerogel insulation composite of claim 1, wherein the hydrophobic aerogel particles have an average particle diameter (by weight) of about 0.1-3 mm.

3. The heat resistant aerogel insulation composite of claim 2, wherein the hydrophobic aerogel particles have an average particle diameter (by weight) of about 0.5-2 mm

4. The heat resistant aerogel insulation composite of claim 3, wherein at least about 95% of the hydrophobic aerogel particles (by weight) have a particle diameter of about 0.5-2 mm.

5. The heat resistant aerogel insulation composite of any of claims 1-4, wherein the hydrophobic aerogel particles comprise an opacifying agent.

6. The heat resistant aerogel insulation composite of claim 5, wherein the opacifying agent is titania, carbon black, or a mixture thereof.

7. The heat resistant aerogel insulation composite of any of claims 1-6, wherein the hydrophobic aerogel particles comprise fibers.

8. The heat resistant aerogel insulation composite of any of claims 1-7, wherein the hydrophobic aerogel particles are approximately spherical.

9. The heat resistant aerogel insulation composite of any of claims 1-8, wherein the insulation base layer comprises 5-99 vol.% hydrophobic aerogel particles.

10. The heat resistant aerogel insulation composite of any of claims 1-9, wherein the insulation base layer comprises a foaming agent.

11. The heat resistant aerogel insulation composite of any of claims 1-10, wherein the insulation base layer comprises 1-95 vol.% of the aqueous binder.

12. The heat resistant aerogel insulation composite of any of claims 1-11, wherein the aqueous binder is an acrylic binder, a silicone-containing binder, a phenolic binder, or a mixture thereof.

13. The heat resistant aerogel insulation composite of claim 12, wherein the aqueous binder is an acrylic binder.

14. The heat resistant aerogel insulation composite of any of claims 1-13, wherein the aqueous binder is a foamed binder.

15. The heat resistant aerogel insulation composite of any of claims 1-14, wherein the insulation base layer further comprises a flame retardant.

16. The heat resistant aerogel insulation composite of any of claims 1-15, wherein the insulation base layer is about 1-10 mm thick.

17. The heat resistant aerogel insulation composite of any of claims 1-16, wherein the insulation base layer has a thermal conductivity of about 40 mW/(m·K) or less.

18. The heat resistant aerogel insulation composite of any of claims 1-17, wherein the insulation base layer has a density of about 0.5 g/cm³ or less.

19. The heat resistant aerogel insulation composite of any of claims 1-18, wherein the protective binder is an acrylic binder, a silicone-containing binder, a phenolic binder, or a mixture thereof.

20. The heat resistant aerogel insulation composite of claim 19, wherein the protective binder is an acrylic binder.

21. The heat resistant aerogel insulation composite of any of claims 1-20, wherein the protective binder is a cross-linked binder.

22. The heat resistant aerogel insulation composite of any of claims 1-21, wherein the thermally reflective top layer further comprises an anti-sedimentation agent.

23. The heat resistant aerogel insulation composite of any of claims 1-22, wherein the infrared reflecting agent comprises metallic particles.

24. The heat resistant aerogel insulation composite of claim 23, wherein the metallic particles are aluminum particles.

25. The heat resistant aerogel insulation composite of any of claims 1-24, wherein the thermally reflective top layer further comprises a flame retardant.

26. The heat resistant aerogel insulation composite of any of claims 1-25, wherein the thermally reflective top layer further comprises reinforcing fibers.

27. The heat resistant aerogel insulation composite of any of claims 1-26, wherein the thermally reflective top layer further comprises carbon fibers.

28. The heat resistant aerogel insulation composition of any of claims 1-27, wherein the thermally reflective top layer is about 1 mm thick or less.

29. A substrate comprising the heat resistant aerogel insulation composite of any of claims 1-28.

30. The substrate of claim 29, wherein the substrate is a component of a motorized vehicle or device.

31. The substrate of claim 30, wherein the substrate is the underbody of a motorized vehicle or part thereof.

32. A method for preparing a heat resistant aerogel insulation composite comprising
(a) providing on a substrate an insulation base layer comprising hydrophobic aerogel particles and an aqueous binder, and
(b) applying to a surface of the insulation base layer a thermally reflective top layer comprising a protective binder and an infrared reflecting agent.

33. The method of claim 32, wherein the insulation base layer is provided by
(a) providing a binder composition comprising an aqueous binder and a foaming agent,
(b) agitating the binder composition to provide a foamed binder composition,
(c) combining the foamed binder composition with the hydrophobic aerogel particles to provide an aerogel binder composition, and
(d) applying the aerogel binder composition to the substrate to provide the insulation base layer.

34. The method of claim 32, wherein the insulation base layer is provided by
(a) providing a binder composition comprising an aqueous binder,
(b) providing an aerogel composition comprising hydrophobic aerogel particles, and
(c) simultaneously applying the binder composition and the aerogel composition to the substrate, wherein the binder composition is mixed with the aerogel composition to provide the insulation base layer.

35. The method of any of claims 32-34, wherein the insulation base layer is applied to the substrate by spraying.

36. The method of any of claims 32-35, wherein the top layer is applied to the surface of the insulation base layer by spraying.

37. The method of any of claims 32-36, wherein the top layer is applied to the surface of the insulation base layer while the insulation base layer is wet.

38. The method any of claims 32-37, wherein the hydrophobic aerogel particles have an average particle diameter (by weight) of about 0.1-3 mm.

39. The method of claim 38, wherein the hydrophobic aerogel particles have an average particle diameter (by weight) of about 0.5-2 mm

40. The method of claim 39, wherein at least about 95% of the hydrophobic aerogel particles (by weight) have a particle diameter of about 0.5-2 mm.

41. The method of any of claims 32-40, wherein the hydrophobic aerogel particles comprise an opacifying agent.

42. The method of claim 41, wherein the opacifying agent is titania or carbon black.

43. The method of any of claims 32-42, wherein the hydrophobic aerogel particles comprise fibers.

44. The method of any of claims 32-43, wherein the hydrophobic aerogel particles are approximately spherical.

45. The method of any of claims 32-44, wherein the insulation base layer comprises 5-99 vol.% hydrophobic aerogel particles.

46. The method of any of claims 32 or 34-45, wherein the insulation base layer comprises a foaming agent.

47. The method of any of claims 32-46, wherein the insulation base layer comprises 1-95 vol.% of the aqueous binder.

48. The method of any of claims 32-47, wherein the aqueous binder is an acrylic binder, a silicone-containing binder, a phenolic binder, or a mixture thereof.

49. The method of claim 48, wherein the aqueous binder is an acrylic binder.

50. The method of any of claims 32 or 34-49, wherein the aqueous binder is a foamed binder.

51. The method of any of claims 32-50, wherein the insulation base layer further comprises a flame retardant.

52. The method of any of claims 32-51, wherein the insulation base layer is about 1-15 mm thick.

53. The method of any of claims 32-52, wherein the insulation base layer has a thermal conductivity of about 40 mW/(m·K) or less.

54. The method of any of claims 32-53, wherein the insulation base layer has a density of about 0.5 g/cm³ or less.

55. The method of any of claims 32-54, wherein the protective binder is an acrylic binder, a silicone-containing binder, a phenolic binder, or a mixture thereof.

56. The method of claim 55, wherein the protective binder is an acrylic binder.

57. The method of any of claims 32-56, wherein the protective binder is a cross-linked binder.

58. The method of any of claims 32-57, wherein the thermally reflective top layer further comprises an anti-sedimentation agent.

59. The method of any of claims 32-58, wherein the infrared reflecting agent comprises metallic particles.

60. The method of claim 59, wherein the metallic particles are aluminum particles.

61. The method of any of claims 32-60, wherein the thermally reflective top layer further comprises a flame retardant.

62. The method of any of claims 32-61, wherein the thermally reflective top layer is about 1 mm thick or less.

63. The method of any of claims 32-62, wherein the thermally reflective top layer further comprises reinforcing fibers.

64. The method of any of claims 32-63, wherein the thermally reflective top layer further comprises carbon fibers.

65. A method for preparing an aerogel binder composition comprising
(a) providing a binder composition comprising an aqueous binder and a foaming agent,
(b) agitating the binder composition to provide a foamed binder composition, and
(c) combining the foamed binder composition with hydrophobic aerogel particles to provide an aerogel binder composition.

66. A method for preparing an aerogel binder composition comprising
(a) providing a binder composition comprising an aqueous binder,
(b) providing an aerogel composition comprising hydrophobic aerogel particles, and
(c) simultaneously applying the binder composition and the aerogel composition to a substrate, whereupon the binder composition is mixed with the aerogel composition to provide an aerogel binder composition.

67. The method of claim 65 or 66, wherein the hydrophobic aerogel particles have an average particle diameter (by weight) of about 0.1-3 mm.

68. The method of claim 67, wherein the hydrophobic aerogel particles have an average particle diameter (by weight) of about 0.5-2 mm

69. The method of claim 68, wherein at least about 95% of the hydrophobic aerogel particles (by weight) have a particle diameter of about 0.5-2 mm.

70. The method of any of claims 65-69, wherein the hydrophobic aerogel particles are approximately spherical.

71. The method of any of claims 65-70, wherein the aerogel binder composition comprises 5-99 vol.% hydrophobic aerogel particles.

72. The method of any of claims 65-71, wherein the aerogel binder composition comprises 0.1-5 wt.% of the foaming agent.

73. The method of any of claims 65-72, wherein the aerogel binder composition comprises 1-95 vol.% of the aqueous binder.

74. The method of any of claims 65-73, wherein the hydrophobic aerogel particles comprise an opacifying agent.

75. The method of claim 74, wherein the opacifying agent is titania or carbon black.

76. The method of any of claims 65-75, wherein the hydrophobic aerogel particles comprise fibers.

77. The method of any of claims 65-76, wherein the aqueous binder is an acrylic binder, a silicone binder, a urea-formaldehyde binder, or a mixture thereof.

78. The method of claim 77, wherein the aqueous binder is an acrylic binder.

79. The method of any of claims 65-78, wherein the aerogel binder composition has a thermal conductivity of about 40 mW/(m·K) or less.

80. The method of any of claims 65-79, wherein the aerogel binder composition has a density of about 0.5 g/cm³ or less.

81. An aerogel binder composition prepared by the method of any of claims 65-80.
